# EUROPÄISCHE PATENTSCHRIFT

(11) **EP 2 682 224 B1**
(45) Veröffentlichungstag und Bekanntmachung des Hinweises auf die Patenterteilung: **11.07.2018**
(21) Anmeldenummer: 13186609.7
(22) Anmeldetag: 22.04.2008
(51) Int. Cl.: B23P 11/02, H05B 6/14

(54) **Vorrichtung zum Kühlen eines heissen Werkzeugspannfutters**
Device for cooling a hot toolholder
Dispositif pour refroidir un mandrin porte-outil chaud

(30) Priorität: 01.06.2007 DE 202007007837 U
(43) Veröffentlichungstag der Anmeldung: 08.01.2014
(62) Teilanmeldung aus: 08749047.0
(73) Patentinhaber: Franz Haimer Maschinenbau KG, 86568 Hollenbach-Igenhausen (DE)
(72) Erfinder: Haimer, Franz, 86568 Igenhausen (DE)
(74) Vertreter: Bockhorni & Kollegen

(56) Entgegenhaltungen:
- DE-A1-102005 003 855
- DE-A1-102005 004 166
- DE-A1-102005 025 459
- US-B1- 6 861 625

## Beschreibung

Die Erfindung betrifft eine Vorrichtung zum Kühlen eines heißen Werkzeugspannfutters, insbesondere für eine Vorrichtung zum Ein- und/oder Ausspannen von einen Werkzeugschaft aufweisenden Werkzeugen in ein Werkzeugspannfutter mittels Schrumpfverbund zwischen dem Werkzeugspannfutter und dem Werkzeugschaft.

Eine derartige Vorrichtung zum Ein- und/oder Ausspannen ist z. B. aus der deutschen Patentanmeldung DE 103 48 880 A1 bekannt, die den grundlegenden Aufbau und die Funktion einer solchen Vorrichtung im Detail beschreibt und die daher durch Verweisung zum Gegenstand der hiesigen Beschreibung gemacht wird.

Ein generelles Problem bei derartigen Vorrichtungen stellt das Wiederabkühlen des jeweiligen, zum Zwecke des Ein- oder Ausspannens erhitzten Werkzeugspannfutters dar. Zum einen, weil die für das Abkühlen benötigte Zeit tendenziell die insgesamt für den Werkzeugwechsel benötigte Zeit bis zur Bereitstellung eines wiedereinsatzfähigen Werkzeugs verlängert. Zum anderen, weil das manuelle Entnehmen von noch heißen Werkzeugspannfüttern mit einer erheblichen Unfallgefahr verbunden ist.

Es ist daher bereits in Betracht gezogen worden, eine Kühlung mittels fester Kühlkörper vorzunehmen, d. h. dadurch, dass man das Werkzeugspannfutter mit einem anderen, gut wärmeleitenden Festkörper in innigen Kontakt bringt, in den dann die im Werkzeugspannfutter gespeicherte Wärme schnell abfließt.

Eine derartige Kühlung ist jedoch in der Praxis relativ schwer zu bewerkstelligen. Es muss zwingend ein inniger Flächenkontakt zwischen Futter und Kühlkörper bestehen, da nur so effizient Wärme abgeleitet werden kann. Die Werkzeugspannfutter bzw. deren das eigentliche Spannen bewirkenden Hülsenpartien müssen eine konische Außenkontur haben, da sich nur so ein hinreichend inniger Kontakt herstellen lässt. Bei zylindrischen Futtern ist die Herstellung des benötigten Flächenkontaktes schwierig. In jedem Fall müssen der Kühlkörper und das Futter aufeinander abgestimmt sein. Eine echte Integration des Kühlkörpers in die Spuleneinheit ist nicht möglich. Das Erwärmen und Kühlen hat also an verschiedenen Stellen zu erfolgen. Folglich sind heiße Futter zu handhaben. Ein derartiges Kühlen vollständig oder zumindest weitgehend zu automatisieren bereitet erhebliche Schwierigkeiten.

DE 10 2005 003 855 A1 beschreibt eine Vorrichtung zum Kühlen eines heißen Werkzeugspannfutters mit den angegebenen Nachteilen, bei der als Festkörper Heatpipes verwendet werden. Außerdem ist eine Lösung angegeben, bei der durch eine Kältemaschine abgekühlte Luft gegen die abzukühlende Hülsenpartie geblasen wird. Diese Lösung ist sehr aufwendig.

In der Praxis erfolgt daher im Regelfall eine Kühlung mit Wasser - dergestalt, dass das Futter aus der Spannvorrichtung entnommen und in ein Wasserbad eingetaucht oder abgebraust wird. Auch das hat erhebliche Nachteile, da wiederum kaum eine Integration in die Spuleneinheit möglich ist, sondern abermals das heiße Futter gehandhabt werden muss. Erst recht ist bei einer derartigen Kühlung nur schwerlich eine weitgehende bzw. vollständige Automatisierung möglich. Zudem wird das Futter komplett nass. Es muss anschließend sorgfältig getrocknet werden, was aufwändig ist. Insgesamt ist auch bei einer derartigen Kühlung eine lange Zykluszeit erforderlich.

Demgemäß ist es die Aufgabe der Erfindung eine Vorrichtung zum Kühlen eines heißen Werkzeugspannfutters der bekannten Art dahingehend zu verbessern, dass das heiße Futter an Ort und Stelle gekühlt wird.

Diese Aufgabe wird durch die Vorrichtung gemäß Anspruch 1 gelöst. Die Vorteile und Wirkungsweise insbesondere auch der von den Unteransprüchen vorgesehenen speziellen Ausführungsarten ergeben sich aus der nachfolgenden Figurenbeschreibung für die Ausführungsbeispiele.

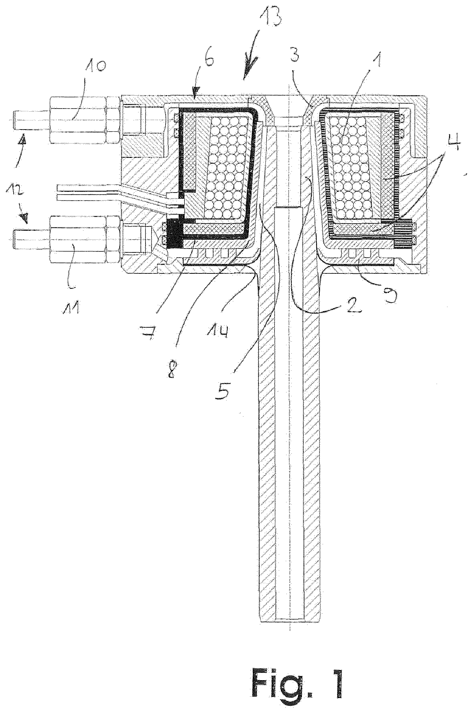

Die Fig. 1 zeigt ein erstes Ausführungsbeispiel der Erfindung. Die Induktionsspule 1 bildet zusammen mit dem Feldkonzentrator 3, der Hülsenpartie 2 des Werkzeugspannfutters und den Feldleiteinrichtungen 4 einen magnetischen Kreis, der bei aktivierter Spule 1 die Hülsenpartie 2 des Werkzeugspannfutters erhitzt.

Die Hülsenpartie 2 bildet dabei zusammen mit dem die Spule 1 umgebenden Spulengehäuse 6 einen Kühlkanal 5. Dieser wird beispielsweise mit Wasser durchspült, das i. d. R. mit Korrosionsinhibitoren versetzt sein wird. Es kann auch jedes andere geeignete Fluid verwendet werden, z. B. eine geeignete Flüssigkeit, wie etwa Glykol oder aber Gas oder verflüssigtes Gas. Der Kühlkanal erstreckt sich zwischen der Kühlmittelspeiseleitung 10 und der Kühlmittelabsaugleitung 11. Er ist bei eingesetztem Werkzeugspannfutter gegenüber der Umgebung zumindest weitestgehend abgedichtet.

Ein Abschnitt dieses Kühlkanals 5 läuft zwischen der inneren Oberfläche der durch eine kühlmitteldichte Kapselung 7 (z. B. Verguss) und einen Wärmeschutzschild 8 geschützten Induktionsspule 1 und der Hülsenpartie 2 entlang. Dabei bildet die Hülsenpartie entlang zumindest eines Teils dieses Bereichs unmittelbar eine der Wände des Kühlkanals 5, was einen hervorragenden Wärmeübergang ermöglicht.

Um dies zu realisieren ist im Bereich der Öffnung, über die die Hülsenpartie 2 in das Innere der Spule 1 eingeschoben wird, eine Stulpendichtung 14 vorgesehen. Diese ist derart weich ausgebildet, dass sie sich dicht an die Hülsenpartie anlegt, sobald diese in die Spule eingeschoben ist. An ihrer oberen freien Stirnfläche liegt die Hülsenpartie mit der nötigen Pressung an die entsprechend genau ausgeführte Gegenfläche des Feldkonzentrators 3 an. Die Anlage ist derart, dass auch hier eine Abdichtung erreicht wird - zumindest im Wesentlichen, nämlich in dem Sinne, dass während des nur wenige Augenblicke dauernden Kühlzyklus allenfalls einige wenige Tropfen Kühlmittel austreten, so dass die Hülsenpartie 2 bzw. das Futter allenfalls nur unerheblich nass werden.

Die Arbeitsweise der Vorrichtung ist, hier am Beispiel des Ausspannens geschildert, die Folgende:
Unmittelbar nach Beendigung des Aufheizvorganges wird der Schaft des auszuspannenden Werkzeugs aus der Hülsenpartie 2 herausgezogen.

Dann wird über die Kühlmittelspeiseleitung 10 mit Hilfe einer Kühlmittelpumpe oder des Druckes des Kühlmittelreservoirs bzw. Kühlmittelversorgungsnetzes Kühlmittel in den Spalt 5 eingespült. Dieses überstreicht die Hülsenpartie und kühlt sie innerhalb weniger Sekunden auf eine Temperatur ab, die eine gefahrlose Handhabung des Futters erlaubt. Im Regelfall liegt schon in diesem Stadium Unterdruck an der Kühlmittelabsaugleitung 11 an, um eventuell entstehenden Kühlmitteldampf abzusaugen. Ein Temperaturfühler im Rücklauf des Kühlmediums kann den Kühlvorgang überwachen, d. h. den Kühlvorgang beenden, sobald das rückströmende Kühlmittel eine bestimmte untere Grenztemperatur erreicht hat oder sich dessen Temperatur nicht mehr wesentlich ändert. Das Ende des Kühlvorganges kann optisch oder akustisch angezeigt werden.

Die Kühlmittelzufuhr wird nun gestoppt. Da spätestens jetzt an der Kühlmittelabsaugleitung 11 Unterdruck angelegt wird, wird das noch im Kühlkanal 5 befindliche Kühlmittel nahezu restlos abgezogen. Sofern die Kühlmittelspeise- und -absaugleitung mit hier nicht gezeigten 3-WegeVentilen ausgerüstet sind, wird nun ggf. für einige Sekunden Pressluft oder dergl. durch den Kühlkanal 5 geblasen, um die benetzte Oberfläche der Hülsenpartie zu trocknen. Dann wird die Hülsenpartie aus der Spule herausgezogen und der nächste Zyklus kann beginnen, indem die nächste Hülsenpartie dichtend in die Spule eingeschoben wird.

Ein wesentlicher Punkt ist, dass zu keinem Zeitpunkt eine Gefahr von Verbrennungen für den Bediener besteht, da der heiße Bereich des Futters zu keinem Zeitpunkt zugänglich ist, sondern vollständig von der Spule und der Kühleinrichtung abgedeckt wird.

Ein entscheidender Vorteil dieser Lösung ist, dass die Außenkontur der Hülsenpartie 2 in bestimmten Grenzen variieren kann, da wegen der direkten Benetzung keine besonderen Anforderungen an die Kontur der Hülsenpartie zu stellen sind.

Ein nicht unerheblicher Gesichtspunkt ist, dass die Induktionsspule 1 komplett vergossen bzw. umspritzt oder einvulkanisiert ist, so dass sie zuverlässig gegen ein Eindringen von Kühlmittel oder Kühlmitteldampf geschützt ist. Um die Dichtheit der Vergussmasse zu überprüfen, kann an die Spulenwicklung während eines Testzyklus eine geringe Spannung angelegt werden. Mit einer Gegenelektrode im Kühlmittelkreislauf wird gemessen, ob ein Stromfluss zwischen Spule und Kühlmittel stattfindet.

Da die Außendurchmesser der Hülsenpartien der in der Praxis zu schrumpfenden Futter sehr stark variieren, lassen sich bei Verwendung der hier gezeigten starren Induktionsspule nicht alle Hülsendurchmesser mit einer einzigen Spule schrumpfen. Daher gehört zu einer erfindungsgemäßen Vorrichtung oft nicht nur eine einzige solche Spule, sondern ein Spulensatz mit mehreren Spulen die austauschbar sind. Zweckmäßigerweise bildet jede Spule zusammen mit ihrem den Kühlkanal 5 bildenden Gehäuse 6 ein auswechselbares Modul. Dieses Modul ist über eine lösbare elektrische Verbindung und werkzeuglos zu betätigende Schnellkupplungen für die Kühlmittelversorgung an die übrige Vorrichtung angeschlossen. Es kann mit wenigen Handgriffen als gesamte Moduleinheit ein- und ausgebaut werden, je nachdem, welcher Hülsen-Durchmesser gerade zu schrumpfen ist. Dabei verbleibt die gesamte Kühlmittelführung bei der betreffenden Spule, wird also mit ihr ein- und ausgebaut, was eine schnelle und saubere Handhabung ermöglicht. Der Anlagenbediener kommt dabei praktisch nicht mit der Kühlflüssigkeit in Berührung. Im Rahmen der Erfindung ist es, anstelle eines Austauschs der einzelnen Spulen, auch möglich, alle Spulen eines Spulensatzes an die Vorrichtung anzuschließen und bei bedarf nur einzelne Spulen zu beschalten, d.h. mit Strom zu versorgen und in den Kühlmitteldurchlauf einzubinden.

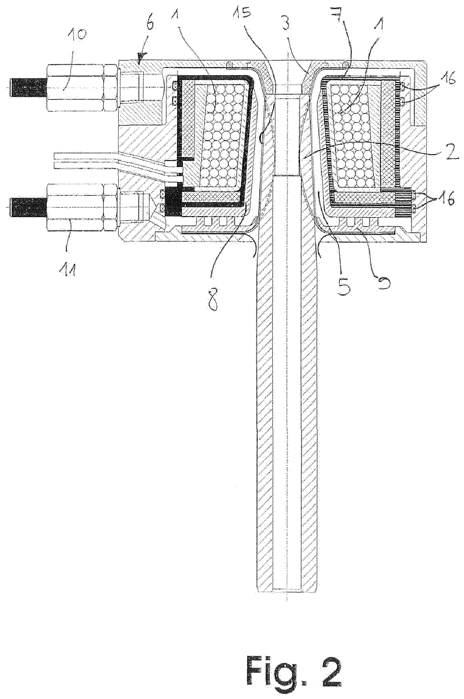

Die Fig. 2 zeigt ein alternatives Ausführungsbeispiel der Erfindung.

Der Unterschied zu dem von Fig. 1 gezeigten Ausführungsbeispiel besteht hier einzig und allein darin, dass die Hülsenpartie nicht unmittelbar mit dem Kühlmittel in Kontakt kommt, sondern nur über eine Dichtungsmembran 15 bzw. über einen Dichtungsbalg. Dementsprechend kann dann auch Stulpendichtung 14 entfallen, die hier jedoch als zusätzliche Dichtung noch umfasst ist.

Auch im Bereich des Feldkonzentrators 3 müssen keine besonderen Maßnahmen zur Abdichtung mehr getroffen werden. Denn auch in diesem Bereich dichtet die Dichtungsmembran 15 ab, die hier zwischen der Spule und dem Feldkonzentrator entlang läuft - hin zu der Stelle, an der sie mit ihrem tropfenförmigen bzw. wulstartigen Fortsatz in das Spulengehäuse 6 eingeknüpft ist.

Soweit dem nicht durch die Funktion der Dichtungsmembran bedingte Unterschiede entgegenstehen gilt daher das oben im Zusammenhang mit der Fig. 1 Gesagte hier entsprechend.

Nach der Erwärmung der Hülsenpartie wird zum Zwecke des Kühlens Kühlmittel durch den Spalt zwischen Spule und Dichtungsmembran 15 gepumpt. Die Dichtungsmembran bläht sich auf Grund des Kühlmitteldrucks auf und tritt in Flächenkontakt mit dem Futter (der in Fig. 2 gestrichelt angedeutete Verlauf der Dichtungsmembran 15 würde sich einstellen, wenn kein Futter bzw. keine Hülsenpartie eingeschoben wäre). Das Futter wird nicht benetzt und braucht daher nach dem Kühlvorgang nicht getrocknet zu werden. Das Kühlmittel fließt in einem geschlossenen Kreislauf. Es sind keine Dichtungen notwendig, die bei jedem neuen Zyklus so sauber an der Hülsenpartie anliegen müssen, dass eine ordnungsgemäße Abdichtung gegen die Hülsenpartie erreicht wird - und die damit eine Gefahr von Bedienungsfehlern und/oder Verschleiß bergen.

Ebenso bleibt die Kühleinrichtung im Rahmen der Flexibilität der Dichtungsmembran auch hier weitgehend unabhängig von der Kontur der Hülsenpartie. Es gilt also auch hier, gleichermaßen wie für Fig. 1, dass nahezu alle gängigen Futter gekühlt werden können und nicht nur solche die angepasst sind und mit der Gesamtvorrichtung ein teueres "System" bilden.

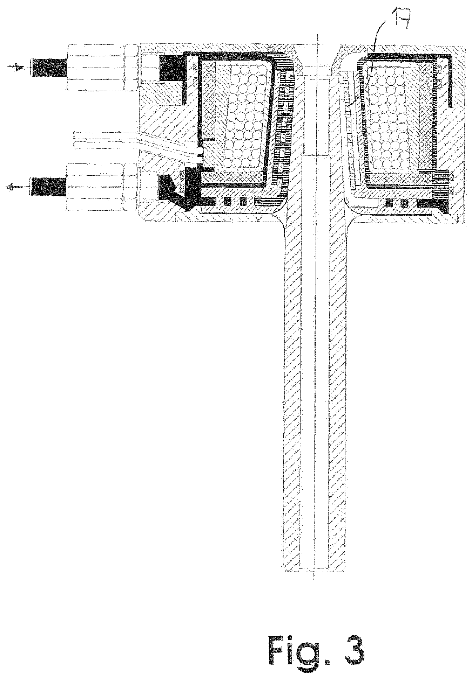

Die Fig. 3 zeigt ein weiteres Ausführungsbeispiel der Erfindung, das sich von dem durch Fig. 1 gezeigten Ausführungsbeispiel der Erfindung nur dadurch unterscheidet, dass hier zusätzlich ein Düsenkörper 17 in den Bereich des Kühlkanals 5 eingesetzt ist, der in der gezeigten Weise zwischen der inneren Umfangsfläche der Spule 1 und der Hülsenpartie 2 entlang läuft. Daher gilt auch hier das zu Fig. 1 Gesagte, soweit sich aus dem Prinzip des Düsenkörpers nichts anderes ergibt.

Der Düsenkörper 17 ist auf seiner der Spulenwicklung zugewandten Seite mit einem Einströmkanal für das Kühlmittel versehen. Weiterhin ist er mit hier in etwa in radialer Richtung verlaufenden Düsenbohrungen versehen, über die der auf der Seite des Einströmkanals anstehende Kühlmitteldruck weitgehend abgebaut wird und die dafür das Kühlmittel zerstäuben bzw. vernebeln und in diesem Zustand auf die zu kühlende Oberfläche der Hülsenpartie 2 auftreffen lassen, wo es ggf. verdampft. Der entstehende Dampf, bzw. das nach unten ablaufende Kühlmittel und Kondensat, werden über die Kühlmittelabsaugleitung 11 abgezogen.

Dieser Düsenkörper 17 hat den entscheidenden Vorteil, dass die benötigte Kühlmittelmenge entscheidend verringert werden kann. Der Prozess lässt sich hiermit ohne weiteres so steuern, dass das Kühlmittel auf der heißen Oberfläche der Hülsenpartie 2 weitgehend verdampft, was bekanntlich einen sehr hohen Energieumsatz mit sich bringt, d. h. eine effektive Kühlung bei kleiner Kühlmittelmenge. Dies kann insbesondere dort von Vorteil sein, wo die Anlage nicht an ein Kühlmittelnetz angeschlossen betrieben wird, sondern mit einem kleinen Kühlmittelvorrat auskommen muss. Zudem erübrigt sich u. U. das Problem der Kühlmittelabfuhr, da z. B. Wasserdampf oft kurzerhand in die Umgebung entlassen werden kann.

Vom Grundsatz her ist es denkbar, dass auch für die von der Fig. 3 gezeigte Ausführungsform eine Membran verwendet wird, wie in Fig. 2 gezeigt. Je nach Intensität der Bedüsung der Membran kann es hier aber u. U. zu einer zeitweilig sehr hohen thermischen Belastung der Membran 15 kommen, worauf zu achten ist.

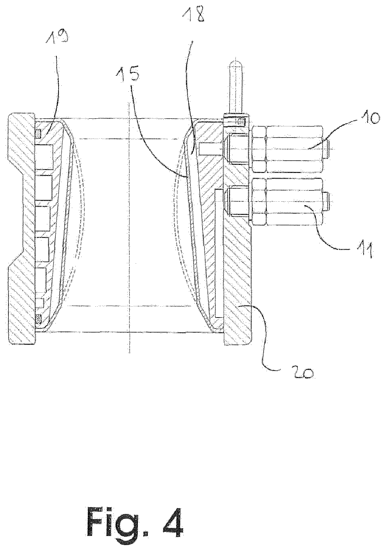

Die Fig. 4 zeigt ein weiteres Ausführungsbeispiel, hier allerdings nicht in Form einer integrierten Kühleinrichtung, sondern in Form einer separaten Kühleinrichtung. Diese besteht aus einer Außenhülse bzw. Manschette 20 die auf die bereits aus der Induktionsspule herausgezogene Hülsenpartie (Hülsenpartie in Fig. 4 nicht gezeigt) aufgeschoben wird.

Die Manschette 20 wird über entsprechende Anschlüsse mit Kühlmittel versorgt. Innen in die Manschette 20 ist, abgedichtet gegenüber der Manschette durch zwei Schnurdichtungen, ein als Wärmetauscher 19 zu bezeichnender hohlzylindrischer Körper eingesetzt bzw. eingepresst, der Nuten aufweist, die zusammen mit der Innenwand der Manschette einen Kühlkanal 5 bilden.

Das durch diesen Kühlkanal 5 strömende Kühlmittel kommt bei dieser Ausführungsart allerdings nicht unmittelbar mit der Hülsenpartie in Kontakt und ist auch nicht lediglich durch die Dichtungsmembran 15 von ihr getrennt. Stattdessen wird der Wärmetauscher 19 von der Dichtungsmembran 15 derart übergriffen und abgedichtet, dass zwischen dem Wärmetauscher 19 und der Dichtungsmembran 15 eine allseitig abgedichtete Tasche besteht. Diese ist mit einer vorzugsweise gelartigen Substanz gefüllt, welche ihrerseits gute Wärmeleiteigenschaften aufweist und als weiteres Kühlmittel fungiert.

Diese Substanz hat die Aufgabe für innigen Kontakt mit der zu kühlenden Hülsenpartie zu sorgen. Sie tut dies, indem sie zusammen mit der sie gefangen gehaltenen, elastischen Dichtungsmembran 15 eine Art "federndes Polster" bildet, das sich an die Hülsenpartie anschmiegt (in Fig. 4 ist diejenige Kontur, die das federnde Polster bei eingeschobener Hülsenpartie einnimmt, schraffiert gezeichnet; die Kontur, die das federnde Polster ansonsten, im unbelasteten Zustand einnimmt, ist ohne Schraffur dargestellt). Die besagte Substanz hat weiterhin die Aufgabe, die Wärme der Hülsenpartie über den Wärmetauscher an das im Kühlkanal 5 fließende Kühlmittel abzuführen.

Eine solche separate Kühleinheit hat den Vorteil, dass, anders als bei Integration, kein Kühlmittel im Nahbereich spannungsführender Teile fließt, also keine entsprechenden Sicherheitsvorkehrungen zu treffen sind. Zudem erlaubt sie ein synchrones Arbeiten - d.h. während ein Futter noch gekühlt wird, kann schon das nächste Futter in der Induktionsspule aufgeheizt werden.

Leicht nachzuvollziehen ist, dass das Kühlkonzept, dass die von Fig. 4 gezeigte separate Kühleinheit verwirklicht, auch für integrierte Kühlvorrichtungen sinnvoll zu verwenden ist, wie sie bspw. die Fig. 2 zeigt und wofür ebenfalls Schutz begehrt wird. Dieses Kühlkonzept, bei dem sich die Gefahr eines unerwünschten Austritts von Kühlmittel aus dem Kühlkanal (z. B. in Folge einer Beschädigung der Dichtungsmembran 15) leicht beherrschen lässt, ist insbesondere auch überall dort sinnvoll einsetzbar, wo anstatt mit Wasser bevorzugt mit einem Kühlmittel gearbeitet wird, das physiologisch nicht ganz unbedenklich ist oder aus anderen Gründen möglichst nicht austreten darf.

Umgekehrt ist leicht nachzuvollziehen, dass die von den Fig. 1 bis 3 gezeigten Kühlkonzepte auch für eine separate Kühleinheit, wie insbesondere in Fig. 4 gezeigt, nutzbringend einsetzbar sind, weshalb auch insoweit Schutz beansprucht wird.

Bei den von den Figuren wiedergegebenen Zeichnungen handelt es sich nicht nur um grobe Skizzen, sondern bereits um detaillierte Konstruktionszeichnungen weshalb sämtliche in den Zeichnungen wiedergegebenen Merkmale bedeutungsvoll im Sinne der jeweiligen Ausführungsform sind.

### Bezugszeichenliste

- 1: Induktionsspule
- 2: Hülsenpartie des Werkzeugspannfutters
- 3: Feldkonzentrator
- 4: Feldleiteinrichtungen
- 5: Kanal (Kühlkanal)
- 6: Gehäuse der Induktionsspule
- 7: Kapselung der Induktionsspule
- 8: Wärmeschutzschild für die Kapselung der Induktionsspule
- 9: Kühlmittelleiteinrichtung zur Intensivierung der Spulenkühlung
- 10: Kühlmittelspeiseleitung
- 11: Kühlmittelabsaugleitung
- 12: Schnellkupplung
- 13: Auswechselbares Modul aus Spule 1 und Gehäuse 6
- 14: Stulpendichtung
- 15: Dichtungsmembran bzw. -balg
- 16: Schnurdichtung
- 17: Düsenkörper
- 18: Kontaktgel
- 19: Wärmetauscher zwischen Kühlmittel und Kontaktgel
- 20: Außenhülse bzw. Manschette

## Patentansprüche

1. Vorrichtung zum Kühlen eines heißen Werkzeugspannfutters, insbesondere für eine Vorrichtung zum Ein- und/oder Ausspannen von einen Werkzeugschaft aufweisenden Werkzeugen, das eine an seinem freien Ende offene Hülsenpartie (2) aus elektrisch leitendem Werkstoff zur reibschlüssigen Aufnahme des Werkzeugschafts aufweist, wobei die Hülsenpartie (2) des Werkzeugspannfutters vorzugsweise mit einer mit hochfrequenten Wechselstrom beaufschlagbaren, als Ring- oder Zylinderspule ausgebildeten Induktionsspule (1) aufgeheizbar ist, umfassend eine auf die zu kühlende Hülsenpartie (2) aufschiebbare Außenhülse bzw. Manschette (20), wobei die Außenhülse bzw. Manschette (20) an ihrer Innenseite mindestens einen zwischen der Innenseite der Außenhülse/Manschette (20) und der Hülsenpartie (2) des Werkzeugspannfutters entlanglaufenden Kanal (5) zumindest teilweise umfasst, durch den ein die Hülsenpartie (2) des Werkzeugspannfutters kühlendes Kühlmittel hindurchgespült wird, **dadurch gekennzeichnet, dass** an der Öffnung, über die die Hülsenpartie (2) in die Vorrichtung eingeschoben bzw. wieder herausgezogen wird, eine Dichtung (14) angebracht ist, die bei in der Vorrichtung gehaltener Hülsenpartie (2) den eine Wand des Kanals (5) bildenden Abschnitt der Hülsenpartie (2) gegen die sich daran anschließende Wand des Kanals (5) abdichtet, wobei die Dichtung (14) als eine flexible Dichtung (14) derart weich ausgebildet ist, dass sie sich dicht an eine in die Außenhülse bzw. Manschette (20) eingeschobene Hülsenpartie (2) anlegt,
und/oder
eine Dichtungsmembran (15) unabhängig von der Kontur der Hülsenpartie (2) sich dicht an diese anschmiegt.

2. Vorrichtung gemäß Anspruch 1, **dadurch gekennzeichnet, dass** der Kanal (5) derart ausgestaltet und geführt ist, dass das Kühlmittel zumindest streckenweise direkt mit der Hülsenpartie (2) in Kontakt kommt, indem die Hülsenpartie (2) abschnittweise eine Wand des Kanals (5) bildet.

3. Vorrichtung nach Anspruch 1 oder 2, **dadurch gekennzeichnet, dass** die Dichtung (14) die Dichtung (14) in Form einer Stulpen- oder flexiblen Lippendichtung ausgeführt ist.

4. Vorrichtung nach Anspruch 1, **dadurch gekennzeichnet, dass** der Kanal (5) derart ausgestaltet und geführt ist, dass das Kühlmittel unter Zwischenlage einer die Wärmeleitung nicht wesentlich behindernden Dichtungsmembran (15) mit der Hülsenpartie (2) in wärmeleitenden Kontakt kommt.

5. Vorrichtung nach Anspruch 1, **dadurch gekennzeichnet, dass** der Kanal (5) derart ausgestaltet und geführt ist, dass das Kühlmittel zumindest streckenweise ein weitgehend ortsfestes weiteres Kühlmittel kühlt, welches direkt oder allenfalls unter Zwischenlage einer die Wärmeleitung nicht wesentlich behindernden Dichtung (15) mit der Hülsenpartie (2) in wärmeleitenden Kontakt kommt.

6. Vorrichtung nach Anspruch 5, **dadurch gekennzeichnet, dass** das weitere Kühlmittel ein Kontaktgel (18) ist.

7. Vorrichtung nach einem der vorhergehenden Ansprüche, **dadurch gekennzeichnet, dass** der Kanal (5), zumindest bei eingesetztem Werkzeugspannfutter, einen zwischen einer Kühlmittelspeiseleitung (10) und einer Kühlmittelabzugsleitung (11) im wesentlichen hydraulisch bzw. pneumatisch abgeschlossenen Pfad bildet.

8. Vorrichtung nach einem der vorhergehenden Ansprüche, **dadurch gekennzeichnet, dass** ein Temperaturfühler im Rücklauf des Kühlmediums angeordnet ist, zur Überwachung des Kühlvorgangs.

9. Vorrichtung nach Anspruch 4 und/oder Anspruch 7, **dadurch gekennzeichnet, dass** der Kanal (5) zur Bildung eines hydraulisch bzw. pneumatisch vollständig geschlossenen Pfades zumindest abschnittsweise die flexiblen Dichtungsmembran (15) umfasst, die sich unter dem Druck des Kühlmittels an die zu kühlende Oberfläche der Hülsenpartie (2) anschmiegt.

10. Vorrichtung nach Anspruch 4 und/oder Anspruch 7, **dadurch gekennzeichnet, dass** der Kanal (5) zur Bildung eines hydraulisch bzw. pneumatisch vollständig geschlossenen Pfades einen vorzugsweise kühlmitteldruckbeständigen Wärmetauscher (19) umfasst, der seinerseits ein weiteres Kühlmittel, wie etwa ein Kontaktgel (18) kühlt, das zumindest abschnittweise zwischen dem Wärmetauscher (19) und der flexiblen Dichtungsmembran (15) gehalten ist und das ein inniges Anschmiegen der flexiblen Dichtungsmembran (15) an die zu kühlende Oberfläche der Hülsenpartie (2) bewirkt.

11. Vorrichtung nach einem der Ansprüche 4, 9 oder 10, **dadurch gekennzeichnet, dass** die Dichtungsmembran (15) bzw. ein Dichtungsbalg aus einem hochtemperaturbeständigen Elastomer besteht, vorzugsweise einem Elastomer aus der Gruppe der Fluorkautschuke.

12. Vorrichtung nach einem der vorhergehenden Ansprüche, **dadurch gekennzeichnet, dass** das Kühlmittel und etwaige Kühlmitteldämpfe über eine Kühlmittelabzugsleitung (11) absaugbar sind.

13. Vorrichtung nach einem der vorhergehenden Ansprüche, **dadurch gekennzeichnet, dass** die Kühlmittelspeiseleitung (10) und die Kühlmittelabzugsleitung (11) über werkzeuglos zu betätigende Schnellkupplungen an- und abgekuppelt werden können.

14. Vorrichtung nach einem der vorhergehenden Ansprüche, **dadurch gekennzeichnet, dass** der Kanal (5) einen Düsenkörper (17) umfasst, der auf der einen Seite von der Kühlmittelspeiseleitung (10) beaufschlagt wird und feine Bohrungen aufweist, über die das Kühlmittel in einen durch den Düsenkörper (17) und den Hülsenabschnitt gebildeten Hohlraum und vorzugsweise direkt gegen den Hülsenabschnitt eingedüst, vorzugsweise zerstäubt wird, wobei der Hohlraum mit der Kühlmittelabzugsleitung (11) in Verbindung steht, die das in den Hohlraum eingedüste Kühlmittel und ggf. auch den dort entstandenen Kühlmitteldampf abzieht.

15. Vorrichtung nach einem der vorhergehenden Ansprüche, **dadurch gekennzeichnet, dass** der Kanal (5) so ausgebildet ist, dass das Kühlmittel spiral- oder mäanderförmig fließt, so dass der Wärmetausch zwischen der Vorrichtung und dem Kühlmittel intensiviert wird.

## Claims

1. Device for cooling a hot tool chuck, particularly for a device for clamping and/or unclamping tools having a tool shaft, the device comprising an open sleeve section (2) at its open end out of electrically conductive material for the frictional engagement of the tool shaft, the sleeve section (2) of the tool chuck preferably being heatable with an induction coil (1) which can preferably be loaded with a high frequency AC current and which is configured as an annular coil or cylindrical coil, comprising an outer sleeve or collar (20) which can be slid onto the sleeve section (2) to be cooled, wherein the outer sleeve or collar (20) at least partly comprises a channel (5) at its inner side which runs along between the inner side of the outer sleeve/collar (20) and the sleeve section (2) of the tool chuck, through which channel a coolant is flowed, which cools the sleeve section (2) of the tool chuck, **characterized in that** a seal (14) is disposed at the opening through with the sleeve section (2) is inserted into the device or removed there from, which seal seals the section of the sleeve section (2) which form a wall of the channel (5) against the wall of the channel (5) connecting with said sleeve section, wherein the seal (14) as a flexible seal (14) is configured soft enough that it attaches tight to a sleeve section (2) which is inserted into the outer sleeve or collar (20), respectively,
and/or
that a sealing membrane (15) adapts tightly to the sleeve section (2) independent of its contour.

2. The device according to claim 1, **characterized in that** the channel (5) is configured such and routed that the coolant at least in sections comes into direct contact with the sleeve section (2), through the sleeve section (2) forming a wall of the channel (5) in sections.

3. The device according to claim 1 or 2, **characterized in that** the seal (14) is configured in form of a fold-over seal or in the form of a flexible lip seal.

4. The device according to claim 1, **characterized in that** the channel (5) is configured and routed that the coolant comes into heat conducting contact with the sleeve section (2) with a sealing membrane (15) placed there between which does not substantially impede heat transfer.

5. The device according to claim 1, **characterized in that** the channel (5) is configured and routed so that the coolant at least over a certain distance cools a substantially locally fixed additional coolant, which comes into heat conducting contact with the sleeve section (2), either directly or at the most with a seal (15) placed therebetween not substantially impeding heat transfer.

6. The device according to claim 5, **characterized in that** the additional coolant is a contact gel (18).

7. The device according to one of the preceding claims, **characterized in that** the channel (5), at least when the tool chuck is inserted, forms an essentially hydraulically or pneumatically closed path between a coolant feed conduit (10) and a coolant scavenging conduit (11).

8. The device according to one of the preceding claims, **characterized in that** a temperature sensor is arranged in the return of the cooling medium in order to monitor the cooling process.

9. The device according to claim 4 and/or claim 7, **characterized in that** the channel (5) for forming a hydraulically or pneumatically completely closed path at least in sections comprises the flexible sealing membrane (15) which attaches to the cooling surface of the sleeve section (2) under the pressure of the coolant.

10. The device according to claim 4 and/or claim 7, **characterized in that** the channel (5) for forming a hydraulically or pneumatically completely closed path comprises a preferably coolant pressure resistant heat exchanger (19), which in turn cools an additional coolant, e.g. a contact gel (18), which is held at least in sections between the heat exchanger (19) and the flexible sealing membrane (15) and which causes a close contact of the flexible sealing membrane (15) to the surface of the sleeve section (2) to be cooled.

11. The device according to one of the claims 4, 9 or 10, **characterized in that** the sealing membrane (15) or a sealing bellows consists of a high temperature resistant elastomer, preferably an elastomer from the group of fluoride-rubbers.

12. The device according to one of the preceding claims, **characterized in that** the coolant and possible coolant vapors can be extracted through a coolant scavenging conduit (11).

13. The device according to one of the preceding claims, **characterized in that** the coolant feed conduit (10) and the coolant scavenging conduit (11) can be coupled and decoupled by quick couplings, which can be operated without tools.

14. The device according to one of the preceding claims, **characterized in that** the channel (5) comprises a jet body (17) which is loaded on the one side by the coolant feed conduit (10) and which comprises fine bore holes, through which the coolant is jetted into a cavity formed by the jet body (17) and by the sleeve section, and preferably directly jetted against the sleeve section, preferably atomized, wherein the cavity is connected to the coolant scavenging conduit (11) which scavenges the coolant jetted into the cavity and, as appropriate, also the coolant vapor created there.

15. The device according to one of the preceding claims, **characterized in that** the channel (5) is configured so that the coolant flows in a spiral or meandering pattern so that the heat exchange between the device and the coolant is intensified.

## Revendications

1. Dispositif destiné au refroidissement d'un mandrin porte-outil chaud, en particulier pour un dispositif destiné au serrage et au desserrage d'outils présentant une tige d'outil, qui présente à son extrémité libre une partie formant manchon (2) ouverte en matériau électriquement conducteur destinée à recevoir par friction la tige d'outil, la partie formant manchon (2) du mandrin porte-outil pouvant être chauffée de préférence avec une bobine d'induction (1) pouvant de préférence être alimentée avec un courant alternatif haute fréquence et constituée en tant que bobine annulaire ou cylindrique, comprenant un manchon extérieur ou respectivement une manchette (20) pouvant être emboîté(e) sur la partie formant manchon (2) à refroidir, le manchon extérieur ou respectivement la manchette (20) comprenant au moins partiellement sur son côté intérieur au moins un conduit (5) courant entre le côté intérieur du manchon extérieur/de la manchette (20) et la partie formant manchon (2) du mandrin porte-outil, et à travers lequel est emporté un agent de refroidissement refroidissant la partie formant manchon (2) du mandrin porte-outil, **caractérisé en ce que**, au niveau de l'orifice par le biais duquel la partie formant manchon (2) peut être introduite dans le dispositif ou respectivement retirée de celui-ci, il est mis en place un joint d'étanchéité (14) qui, quand la partie formant manchon (2) est retenue dans le dispositif, assure l'étanchéité d'un tronçon de la partie formant manchon (2), qui forme une paroi du conduit (5), vis-à-vis de la paroi du conduit (5) qui s'y raccorde, le joint d'étanchéité (14) étant constitué de façon souple en tant que joint d'étanchéité (14) flexible de telle sorte qu'il se presse étroitement contre la partie formant manchon (2) insérée dans le manchon extérieur ou respectivement la manchette (20),
et/ou
une membrane d'étanchéité (15) se serrant étroitement contre la partie formant manchon (2) indépendamment du contour de celle-ci.

2. Dispositif selon la revendication 1, **caractérisé en ce que** le conduit (5) est constitué et guidé de telle sorte que l'agent de refroidissement entre en contact au moins par endroits avec la partie formant manchon (2) par le fait que la partie formant manchon (2) forme par tronçons une paroi du conduit (5).

3. Dispositif selon la revendication 1 ou 2, **caractérisé en ce que** le joint d'étanchéité (14) est réalisé sous la forme d'un fourreau d'étanchéité ou d'une lèvre d'étanchéité souple.

4. Dispositif selon la revendication 1, **caractérisé en ce que** le conduit (5) est constitué et guidé de telle sorte que l'agent de refroidissement entre en contact thermiquement conducteur avec la partie formant manchon (2), avec intercalation d'une membrane d'étanchéité (15) n'empêchant pas de manière substantielle la conduction thermique.

5. Dispositif selon la revendication 1, **caractérisé en ce que** le conduit (5) est constitué et guidé de telle sorte que l'agent de refroidissement refroidit au moins par endroits un autre agent de refroidissement largement stationnaire qui entre en contact thermiquement conducteur avec la partie formant manchon (2), directement ou éventuellement avec intercalation d'un joint d'étanchéité (15) n'empêchant pas de manière substantielle la conduction thermique.

6. Dispositif selon la revendication 5, **caractérisé en ce que** l'autre agent de refroidissement est un gel de contact (18).

7. Dispositif selon l'une des revendications précédentes, **caractérisé en ce que** le conduit (5), au moins quand le mandrin porte-outil est introduit, forme un chemin essentiellement clos hydrauliquement ou pneumatiquement entre une conduite d'alimentation en agent de refroidissement (10) et une conduite de soutirage d'agent de refroidissement (10).

8. Dispositif selon l'une des revendications précédentes, **caractérisé en ce qu'**une sonde de température destinée à surveiller le processus de refroidissement est disposée dans le retour du fluide de refroidissement.

9. Dispositif selon la revendication 4 et/ou la revendication 7, **caractérisé en ce que**, pour la formation d'un chemin complètement fermé hydrauliquement ou pneumatiquement, le conduit (5) comprend au moins par tronçons la membrane d'étanchéité (15) flexible qui se serre contre la surface à refroidir de la partie formant manchon (2) sous la pression de l'agent de refroidissement.

10. Dispositif selon la revendication 4 et/ou la revendication 7, **caractérisé en ce que**, pour la formation d'un chemin complètement fermé hydrauliquement ou pneumatiquement, le conduit (5) comprend un échangeur de chaleur (19), de préférence résistant à la pression de l'agent de refroidissement, qui refroidit de son côté un autre agent de refroidissement, comme par exemple un gel de contact (18), qui est retenu au moins par tronçons entre l'échangeur de chaleur (19) et la membrane d'étanchéité (15) flexible et qui provoque un rapprochement marqué de la membrane d'étanchéité (15) flexible vers la surface à refroidir de la partie formant manchon (2).

11. Dispositif selon l'une des revendications 4, 9 ou 10, **caractérisé en ce que** la membrane d'étanchéité (15) ou respectivement un soufflet d'étanchéité se compose d'un élastomère résistant aux températures élevées, de préférence un élastomère du groupe des caoutchoucs fluorés.

12. Dispositif selon l'une des revendications précédentes, **caractérisé en ce que** l'agent de refroidissement et d'éventuelles vapeurs d'agent de refroidissement peuvent être aspirés par le biais d'une conduite de soutirage d'agent de refroidissement (11).

13. Dispositif selon l'une des revendications précédentes, **caractérisé en ce que** la conduite d'alimentation en agent de refroidissement (10) et la conduite de soutirage d'agent de refroidissement (11) peuvent être accouplées et désaccouplées par le biais d'accouplements rapides à actionner sans outil.

14. Dispositif selon l'une des revendications précédentes, **caractérisé en ce que** le conduit (5) comprend un corps de buse (17) qui est alimenté sur un côté par la conduite d'alimentation en agent de refroidissement (10) et présente des alésages fins par le biais desquels l'agent de refroidissement est injecté, de préférence pulvérisé, dans une cavité formée par le corps de buse (17) et le tronçon de manchon et de préférence directement contre le tronçon de manchon, la cavité étant en liaison avec la conduite de soutirage d'agent de refroidissement (11) qui soutire l'agent de refroidissement injecté dans la cavité et éventuellement également la vapeur d'agent de refroidissement qui y est créée.

15. Dispositif selon l'une des revendications précédentes, **caractérisé en ce que** le conduit (5) est constitué de telle sorte que l'agent de refroidissement s'écoule sous forme spiralée ou sinueuse de sorte que l'échange de chaleur entre le dispositif et l'agent de refroidissement est intensifié.
